# EUROPEAN PATENT APPLICATION

(11) **EP 4 815 067 A1**
(43) Date of publication of application: **30.09.2026**
(21) Application number: 24895810.0
(22) Date of filing: 23.08.2024
(51) Int. Cl.: H01M 4/66, H01M 4/04, H01M 10/00

(54) **COMPOSITE CURRENT COLLECTOR, ELECTRODE SHEET, SECONDARY BATTERY AND ELECTRICAL APPARATUS**

(30) Priority: 27.11.2023 CN 202311601267
(71) Applicant: Contemporary Amperex Technology Co., Limited, Ningde, Fujian 352100 (CN)
(72) Inventor: CAI, Qiguo, Ningde, Fujian 352100 (CN); LIU, Xin, Ningde, Fujian 352100 (CN); HUANG, Qisen, Ningde, Fujian 352100 (CN); LI, Mingling, Ningde, Fujian 352100 (CN); LI, Cheng, Ningde, Fujian 352100 (CN); LIU, Xianghui, Ningde, Fujian 352100 (CN)
(74) Representative: Gong, Jinping
(86) International application number: PCT/CN2024/114336
(87) International publication number: WO 2025/112709

(57) **Abstract**

A composite current collector, an electrode plate, a secondary battery, and an electric apparatus are provided. The composite current collector includes a substrate layer, a bonding layer, and a metal layer. The substrate layer includes a first surface and a second surface opposite each other. The first surface and/or the second surface is provided with the bonding layer and the metal layer. The bonding layer is located between the substrate layer and the metal layer. The metal layer includes a metal seed layer and a metal thickening layer. The metal seed layer is located between the bonding layer and the metal thickening layer. In the composite current collector, designing the structure of the current collector allows for a good bonding force between the metal layer and the substrate layer and also enables the metal layer to have an appropriate thickness.

## Description

### CROSS-REFERENCE TO RELATED APPLICATIONS

This application claims priority to Chinese Patent Application No. 2023116012671, filed on November 27, 2023 and entitled "COMPOSITE CURRENT COLLECTOR, ELECTRODE PLATE, SECONDARY BATTERY, AND ELECTRIC APPARATUS", which is incorporated herein by reference in its entirety.

### TECHNICAL FIELD

This application relates to the field of secondary battery technology, in particular to a composite current collector, an electrode plate, a secondary battery, and an electric apparatus.

### BACKGROUND

The statements herein merely provide background information related to this application and do not necessarily constitute the prior art.

Compared to metal current collectors, composite current collectors have the advantages such as higher safety performance. In a composite current collector, since a substrate layer is usually prepared from an insulating material, the performance differences between a metal layer and the insulating material constrain the improvement of a bonding force between the metal layer and the substrate layer. As a result, in a traditional composite current collector, to achieve a good bonding force between the metal layer and the substrate layer, usually only a thin metal layer can be obtained. However, a thin metal layer has a large internal resistance, which may result in a large internal resistance of the secondary battery, affecting the rate performance of the battery. Therefore, in a traditional composite current collector, it is usually difficult to well balance a good bonding force between the metal layer and the substrate layer and an appropriate thickness of the metal layer.

### SUMMARY

To achieve the above objective, a first aspect of this application provides a composite current collector, including a substrate layer, a bonding layer, and a metal layer. The substrate layer includes a first surface and a second surface opposite each other. At least one of the first surface and the second surface is provided with the bonding layer and the metal layer. The bonding layer is located between the substrate layer and the metal layer. The metal layer includes a metal seed layer and a metal thickening layer, where the metal seed layer is located between the bonding layer and the metal thickening layer.

In the above composite current collector, the provision of the bonding layer can enhance a bonding force between the substrate layer and the metal layer. In addition, the metal thickening layer is disposed on the metal seed layer, enabling the metal layer to have an appropriate thickness. Therefore, in the above composite current collector, designing the structure of the current collector allows for a good bonding force between the metal layer and the substrate layer and also enables the metal layer to have an appropriate thickness.

In some embodiments, the bonding layer includes a polymer with a melting point greater than or equal to 80°C. The melting point of the polymer within this range can maintain good stability of the bonding layer, reducing the risk of pores appearing on the surface of the bonding layer during preparation of the metal seed layer, thereby further enhancing the bonding force between the metal seed layer and the bonding layer. Optionally, the bonding layer includes a polymer with a melting point of 80°C to 400°C. Optionally, the bonding layer includes at least one of polyolefin, ethylene-propylene copolymer, ethylene-vinyl acetate copolymer, ethylene-vinyl alcohol copolymer, polyurethane, epoxy resin, styrene-isoprene-styrene copolymer, styrene-butadiene-styrene copolymer, styrene-ethylene-butylene-styrene copolymer, styrene-ethylene-propylene-styrene copolymer, silicone rubber, phenolic resin, urea-formaldehyde resin, and polyimide.

In some embodiments, a thickness of the bonding layer is 200 nm to 1500 nm. The thickness of the bonding layer within this range can make the composite current collector maintain an appropriate overall thickness while exerting a good bonding effect, reducing the risk of excessive thickness of the composite current collector. Optionally, the thickness of the bonding layer is 300 nm to 700 nm.

In some embodiments, the metal seed layer includes at least one of a sputtered metal seed layer, a vapor-deposited metal seed layer, and a sprayed metal seed layer.

In some embodiments, a thickness of the metal seed layer is 1 nm to 200 nm. The metal seed layer within this thickness range is convenient to prepare and can maintain a good bonding force with the bonding layer. Optionally, the thickness of the metal seed layer is 20 nm to 100 nm.

In some embodiments, the metal seed layer includes at least one of copper, copper alloy, aluminum, and aluminum alloy.

In some embodiments, the metal thickening layer includes an electroplated metal thickening layer. The electroplated metal thickening layer may be a metal thickening layer formed by electroplating. The metal seed layer has good conductivity, facilitating electroplating to form the metal thickening layer.

In some embodiments, a thickness of the metal thickening layer is 0.2 µm to 2 µm. The thickness of the metal thickening layer within this range can make the entire metal layer have an appropriate thickness, enabling the composite current collector to balance an appropriate thickness and internal resistance of the metal layer. Optionally, the thickness of the metal thickening layer is 0.5 µm to 1.5 µm.

In some embodiments, the substrate layer includes at least one of polyamide, polyimide, polyethylene terephthalate, polybutylene terephthalate, polyparaphenylene terephthalamide, polyethylene, polypropylene, poly(ethylene-propylene), polytetrafluoroethylene, polyvinylidene fluoride, polystyrene, polyvinyl chloride, acrylonitrile-butadiene-styrene copolymer, polyoxymethylene, epoxy resin, phenolic resin, silicone rubber, and polycarbonate.

In some embodiments, a thickness of the substrate layer is 2 µm to 10 µm, optionally 3 µm to 8 µm.

A second aspect of this application provides a preparation method of a composite current collector, including the following steps:
providing a substrate layer, where the substrate layer includes a first surface and a second surface opposite each other; and
preparing a bonding layer, a metal seed layer, and a metal thickening layer sequentially on the first surface and/or the second surface.

In some embodiments, the metal seed layer is prepared by at least one of sputtering, vapor deposition, and spraying.

In some embodiments, the metal thickening layer is prepared by electroplating.

A third aspect of this application provides an electrode plate, including at least one of the composite current collector and a composite current collector prepared using the preparation method.

A fourth aspect of this application provides a secondary battery including the electrode plate.

A fifth aspect of this application provides an electric apparatus including at least one of the composite current collector, a composite current collector prepared using the preparation method, the electrode plate, and the secondary battery.

### BRIEF DESCRIPTION OF DRAWINGS

To better describe and illustrate the embodiments or examples provided by this application, reference may be made to one or more drawings. The additional details or examples used to describe the drawings should not be considered as limiting the scope of any of the disclosed applications, the currently described embodiments or examples, or the best mode of these applications as currently understood. Moreover, identical reference signs denote identical components throughout all drawings. In the drawings:
FIG. 1 is a schematic diagram of a secondary battery according to an embodiment of this application.
FIG. 2 is an exploded view of the secondary battery according to an embodiment of this application shown in FIG. 1.
FIG. 3 is a schematic diagram of an electric apparatus using a secondary battery as a power source according to an embodiment of this application.
FIG. 4 is a schematic structural diagram of a composite current collector according to an embodiment of this application.
FIG. 5 is a schematic structural diagram of a composite current collector according to another embodiment of this application.

### Description of reference signs:

1. secondary battery; 11. shell; 12. electrode assembly; 13. cover plate; 2. electric apparatus; 3. composite current collector; 31. substrate layer; 32. bonding layer; 33. metal seed layer; and 34. metal thickening layer.

### DESCRIPTION OF EMBODIMENTS

To facilitate understanding of this application, a more comprehensive description of this application is provided below with reference to the relevant drawings. Preferred embodiments of this application are provided in the drawings. However, this application may be implemented in many different forms and is not limited to the embodiments described herein. On the contrary, the purpose of providing these embodiments is to make the understanding of the disclosure of this application more thorough and comprehensive.

Unless otherwise defined, all technical and scientific terms used herein have the same meaning as commonly understood by those skilled in the technical field of this application. The terms used in the specification of this application are for the purpose of describing specific embodiments only and are not intended to limit this application. The term "and/or" used herein includes any and all combinations of one or more of the associated listed items.

The "range" disclosed in this application may be defined in the form of a lower limit and an upper limit, where a given range is defined by selecting a lower limit and an upper limit, and the selected lower limit and upper limit define the boundaries of a particular range. Ranges defined in this manner may include or exclude endpoints, where either endpoint may be independently included or excluded, and any combination may be made, that is, any lower limit may be combined with any upper limit to form a range. For example, if ranges of 60 to 120 and 80 to 110 are listed for a specific parameter, it is understood that ranges of 60 to 110 and 80 to 120 are also contemplated. Additionally, if minimum range values of 1 and 2 are listed, and if maximum range values of 3, 4, and 5 are listed, the following ranges are all contemplated: 1 to 3, 1 to 4, 1 to 5, 2 to 3, 2 to 4, and 2 to 5. In this application, unless otherwise specified, the numerical range "a to b" represents an abbreviated representation of a combination of any real numbers between a and b, where both a and b are real numbers. For example, the numerical range "0 to 5" means that all real numbers between "0 to 5" have been listed herein, and "0 to 5" is merely an abbreviated representation of a combination of these numbers. Additionally, when a parameter is expressed as an integer greater than or equal to 2, it is equivalent to listing that the parameter is, for example, an integer 2, 3, 4, 5, 6, 7, 8, 9, 10, 11, 12, or the like. For example, when a parameter is expressed as an integer selected from "2 to 10", it is equivalent to listing the integers 2, 3, 4, 5, 6, 7, 8, 9, and 10.

In this application, terms such as "multiple" and "various", unless specifically limited, refer to a quantity greater than 2 or equal to 2. For example, "one or more" indicates one, two, or more.

All embodiments and optional embodiments of this application may be combined with each other to form new technical solutions unless otherwise specified.

References to "embodiment" herein mean that a particular feature, structure, or characteristic described in connection with the embodiment may be included in at least one embodiment or implementation of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments. The term "implementation" mentioned herein has a similar understanding.

Those skilled in the art can understand that in the methods of various embodiments or examples, the order in which the steps are written does not imply a strict execution order that imposes any limitation on the implementation process; and the specific execution order of the steps should be determined by their functions and possible inherent logic. Unless otherwise specified, all steps of this application may be performed sequentially or randomly, preferably performed sequentially. For example, the method includes steps (a) and (b), indicating that the method may include steps (a) and (b) performed sequentially, or steps (b) and (a) performed sequentially. For example, if it is mentioned that the method may further include step (c), it means that step (c) may be added to the method in any order, for example, the method may include steps (a), (b), and (c), or steps (a), (c), and (b), or steps (c), (a), and (b), or the like.

In this application, unless otherwise specified, open-ended technical features or solutions described by words such as "contain", "include", or "comprise" do not exclude additional members beyond the listed members and may be regarded as providing both closed features or solutions including the listed members and open features or solutions including additional members beyond the listed members. For example, when A includes a1, a2, and a3, unless otherwise specified, A may include other members or may not include other members, which may be regarded as providing both the feature or solution "A includes a1, a2, and a3" and the feature or solution "A includes not only a1, a2, and a3 but also other members".

In this application, unless otherwise specified, A (such as B) indicates that B is a non-limiting example of A, and it can be understood that A is not limited to B.

In this application, "optionally", "optional", and "selectable" means that something may or may not be present, that is, it refers to either of two parallel options of "present" or "absent". If "selectable" appears in multiple places in a technical solution, unless otherwise specified and there is no contradiction or mutual constraint, each "selectable" is independent.

An embodiment of this application provides a composite current collector. The composite current collector includes a substrate layer, a bonding layer, and a metal layer. The substrate layer includes a first surface and a second surface opposite each other. At least one of the first surface and the second surface is provided with the bonding layer and the metal layer, where the bonding layer being located between the substrate layer and the metal layer. The metal layer includes a metal seed layer and a metal thickening layer, where the metal seed layer is located between the bonding layer and the metal thickening layer.

In the composite current collector of this embodiment, the provision of the bonding layer can enhance the bonding force between the substrate layer and the metal layer. In addition, the metal thickening layer is disposed on the metal seed layer, enabling the metal layer to have an appropriate thickness. Therefore, in the composite current collector of this embodiment, designing the structure of the current collector allows for a good bonding force between the metal layer and the substrate layer and also enables the metal layer to have an appropriate thickness.

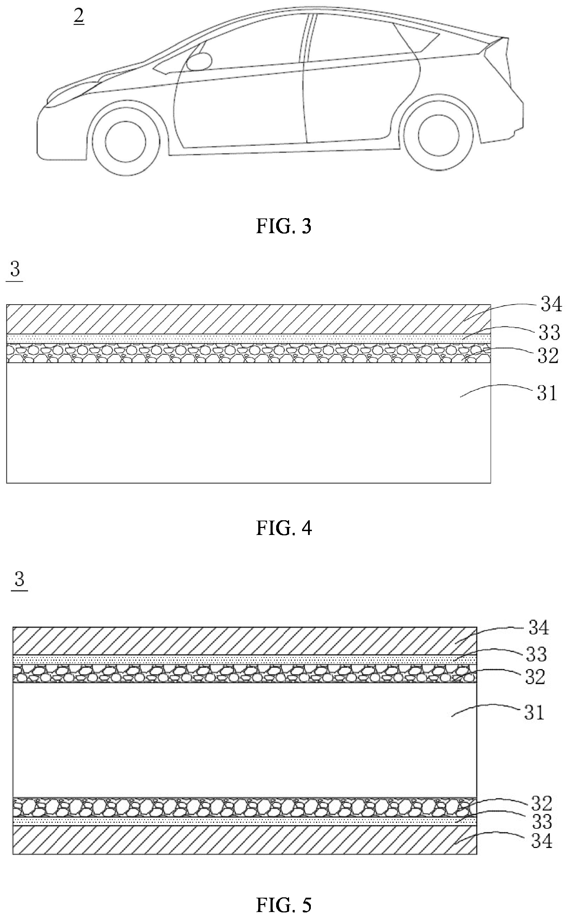

Reference is made to FIG. 4, which shows a structure of a composite current collector 3 according to an embodiment of this application. The composite current collector 3 includes a substrate layer 31, a bonding layer 32, and a metal layer. The substrate layer 31 includes a first surface and a second surface opposite each other. The first surface or the second surface is provided with the bonding layer 32 and the metal layer, where the bonding layer 32 is located between the substrate layer 31 and the metal layer. The metal layer includes a metal seed layer 33 and a metal thickening layer 34, where the metal seed layer 33 is located between the bonding layer 32 and the metal thickening layer 34.

Reference is made to FIG. 5, which shows a structure of a composite current collector 3 according to another embodiment of this application. The composite current collector 3 includes a substrate layer 31, a bonding layer 32, and a metal layer. The substrate layer 31 includes a first surface and a second surface opposite each other. Both the first surface and the second surface are provided with the bonding layer 32 and the metal layer, where the bonding layer 32 is located between the substrate layer 31 and the metal layer. The metal layer includes a metal seed layer 33 and a metal thickening layer 34, where the metal seed layer 33 is located between the bonding layer 32 and the metal thickening layer 34.

It can be understood that, in the composite current collector, reducing the thickness of the metal layer can reduce the overall thickness and manufacturing cost of the composite current collector to some extent. However, a thin metal layer may result in internal resistance, so it is necessary to keep the thickness of the metal layer within an appropriate range. In addition, due to the differences between the substrate layer and the metal layer, an integral thick metal layer is difficult to form a stable bonding force with the substrate layer. In this embodiment, the provision of the bonding layer, the metal seed layer, and the metal thickening layer enables the metal layer to have an appropriate thickness and also achieves a good bonding force between the substrate layer and the metal layer.

In some embodiments, the bonding layer includes a polymer with a melting point greater than or equal to 80 degrees Celsius (°C). Optionally, the bonding layer includes a polymer with a melting point of 80°C to 400°C. The melting point of the polymer within this range can maintain good stability of the bonding layer, reducing the risk of pores appearing on the surface of the bonding layer during preparation of the metal seed layer, thereby further enhancing the bonding force between the metal seed layer and the bonding layer. In addition, the reduction of pores can also reduce the risk of lithium precipitation in the electrode plate. Further optionally, the bonding layer includes at least one of polyolefin, ethylene-propylene copolymer, ethylene-vinyl acetate copolymer, ethylene-vinyl alcohol copolymer, polyurethane, epoxy resin, styrene-isoprene-styrene copolymer, styrene-butadiene-styrene copolymer, styrene-ethylene-butylene-styrene copolymer, styrene-ethylene-propylene-styrene copolymer, silicone rubber, phenolic resin, urea-formaldehyde resin, and polyimide. Still further optionally, the melting point of the polymer included in the bonding layer may be 80°C, 100°C, 120°C, 150°C, 180°C, 200°C, 220°C, 250°C, 280°C, 300°C, 320°C, 350°C, 380°C, 400°C, or the like.

In some embodiments, a melting point of the bonding layer is greater than a melting point of the substrate layer. In this case, during the preparation of the metal seed layer, pores are less likely to be formed on the surface of the bonding layer, which is conducive to further enhancing the bonding force between the metal seed layer and the bonding layer.

In some embodiments, a thickness of the bonding layer is 200 nanometers (nm) to 1500 nm. The thickness of the bonding layer within this range can make the composite current collector maintain an appropriate overall thickness while exerting a good bonding effect, reducing the risk of excessive thickness of the composite current collector. Optionally, the thickness of the bonding layer may be 200 nm, 300 nm, 400 nm, 500 nm, 600 nm, 700 nm, 800 nm, 900 nm, 1000 nm, 1100 nm, 1200 nm, 1300 nm, 1400 nm, 1500 nm, or the like. Further optionally, the thickness of the bonding layer is 300 nm to 700 nm.

In some embodiments, the metal seed layer includes at least one of a sputtered metal seed layer, a vapor-deposited metal seed layer, and a sprayed metal seed layer. It can be understood that the sputtered metal seed layer may be a metal seed layer formed by sputtering such as magnetron sputtering. The vapor-deposited metal seed layer may be a metal seed layer formed by vapor deposition. The sprayed metal seed layer may be a metal seed layer formed by spraying. The sputtered metal seed layer, vapor-deposited metal seed layer, and sprayed metal seed layer can maintain a good bonding force with the bonding layer, which is conducive to improving the overall stability of the structure of the composite current collector. Optionally, the metal seed layer includes a sprayed metal seed layer. A temperature during the formation of the sprayed metal seed layer is relatively low, which can reduce the impact on the bonding layer during preparation of the metal seed layer, thereby reducing the risk of pores appearing in the bonding layer due to high temperature.

In some embodiments, a thickness of the metal seed layer is 1 nm to 200 nm. The metal seed layer within this thickness range is convenient to prepare and can maintain a good bonding force with the bonding layer. Optionally, the metal seed layer may be prepared by at least one of sputtering, vapor deposition, and spraying. Optionally, the thickness of the metal seed layer may be 1 nm, 5 nm, 10 nm, 20 nm, 30 nm, 40 nm, 50 nm, 60 nm, 70 nm, 80 nm, 90 nm, 100 nm, 120 nm, 150 nm, 180 nm, or the like. Further optionally, the thickness of the metal seed layer is 20 nm to 100 nm.

In some embodiments, the metal seed layer includes at least one of copper, copper alloy, aluminum, and aluminum alloy.

In some embodiments, the metal thickening layer includes an electroplated metal thickening layer. It can be understood that the electroplated metal thickening layer may be a metal thickening layer formed by electroplating. The metal seed layer has good conductivity, facilitating electroplating to form the metal thickening layer.

In some embodiments, a thickness of the metal thickening layer is 0.2 micrometer (µm) to 2 µm. The thickness of the metal thickening layer within this range can make the entire metal layer to have an appropriate thickness, enabling the composite current collector to balance an appropriate thickness and internal resistance of the metal layer. Optionally, the thickness of the metal thickening layer may be 0.2 µm, 0.5 µm, 0.8 µm, 1 µm, 1.2 µm, 1.5 µm, 1.5 µm, 1.8 µm, 2 µm, or the like. Further optionally, the thickness of the metal thickening layer is 0.5 µm to 1.5 µm.

In some embodiments, the substrate layer includes at least one of polyamide, polyimide, polyethylene terephthalate, polybutylene terephthalate, polyparaphenylene terephthalamide, polyethylene, polypropylene, poly(ethylene-propylene), polytetrafluoroethylene, polyvinylidene fluoride, polystyrene, polyvinyl chloride, acrylonitrile-butadiene-styrene copolymer, polyoxymethylene, epoxy resin, phenolic resin, silicone rubber, and polycarbonate. Optionally, the thickness of the substrate layer is 2 µm to 10 µm. For example, the thickness of the substrate layer may be 2 µm, 3 µm, 4 µm, 5 µm, 6 µm, 7 µm, 8 µm, 9 µm, 10 µm, or the like. Further optionally, the thickness of the substrate layer is 3 µm to 8 µm.

Another embodiment of this application provides a preparation method of a composite current collector. The preparation method of a composite current collector includes the following steps: providing a substrate layer, where the substrate layer includes a first surface and a second surface opposite each other; and preparing a bonding layer, a metal seed layer, and a metal thickening layer sequentially on the first surface and/or the second surface.

Optionally, the metal seed layer is prepared by at least one of sputtering, vapor deposition, and spraying. The metal thickening layer is prepared by electroplating.

In some embodiments, a preparation method of the bonding layer includes: applying a slurry including raw materials of the bonding layer on a surface of the substrate layer, followed by curing to form the bonding layer.

Optionally, the slurry may be applied by gravure coating. Optionally, a metal seed layer is prepared on a surface of the slurry, followed by curing. This can increase a surface hardness of the bonding layer, and can also further enhance a bonding force between the metal seed layer and the bonding layer. Optionally, the curing is performed at temperature of 80°C to 90°C for a time of 4 seconds (s) to 8 s.

Further optionally, a product obtained after curing is rolled to achieve full adhesion of the metal seed layer and the bonding layer, which can improve the thickness uniformity of the bonding layer.

In some embodiments, the preparation method of a composite current collector includes the following steps: applying a slurry including raw materials of the bonding layer on at least one surface of the substrate layer; preparing a metal seed layer on a surface of the slurry; curing the slurry; rolling a product obtained after curing; performing curing again after rolling; and preparing a metal thickening layer on a surface of the metal seed layer of the cured product.

It can be understood that, during respective preparation of the bonding layer and the metal seed layer on two surfaces of the substrate, the two surfaces of the substrate layer can be operated separately, or the two surfaces of the substrate layer can be operated simultaneously.

Another embodiment of this application provides an electrode plate. The electrode plate includes at least one of the foregoing composite current collector and a composite current collector prepared using the foregoing preparation method.

Another embodiment of this application provides a secondary battery. The secondary battery includes the foregoing electrode plate.

Another embodiment of this application provides an electric apparatus. The electric apparatus includes at least one of the foregoing composite current collector, a composite current collector prepared using the foregoing preparation method, the foregoing electrode plate, and the foregoing secondary battery.

The secondary battery and electric apparatus of this application are described below with appropriate reference to the drawings.

Typically, a secondary battery includes a positive electrode plate, a negative electrode plate, an electrolyte, and a separator. During charging and discharging of the battery, active ions intercalate and deintercalate back and forth between the positive electrode plate and the negative electrode plate. The electrolyte serves to conduct ions between the positive electrode plate and the negative electrode plate. The separator is disposed between the positive electrode plate and the negative electrode plate, primarily to prevent short-circuiting between the positive and negative electrodes while allowing ions to pass through.

### Positive electrode plate

The positive electrode plate includes a positive electrode current collector and a positive electrode film layer disposed on at least one surface of the positive electrode current collector, where the positive electrode film layer includes a positive electrode active material.

As a non-limiting example, the positive electrode current collector has two opposite surfaces in its thickness direction, and the positive electrode active material layer is disposed on either one or both of the two opposite surfaces of the positive electrode current collector.

In some embodiments, the positive electrode current collector may be a metal foil or a composite current collector. For example, as a metal foil, aluminum foil may be used. The composite current collector may be the composite current collector described above. The composite current collector may also include a polymer material substrate and a metal layer formed on at least one surface of the polymer material substrate. The composite current collector may be obtained by forming a metal material on a polymer material substrate. Non-limiting examples of the metal material in the positive electrode current collector may include one or more of aluminum, aluminum alloy, nickel, nickel alloy, titanium, titanium alloy, silver, and silver alloy. Non-limiting examples of the polymer material substrate in the positive electrode current collector may include one or more of substrates such as polypropylene (PP), polyethylene terephthalate (PET), polybutylene terephthalate (PBT), polystyrene (PS), and polyethylene (PE).

In some embodiments, the positive electrode active material may be a positive electrode active material well known in the art for batteries. As a non-limiting example, the positive electrode active material may include one or more of the following materials: lithium-containing phosphates with an olivine structure, lithium transition metal oxides, and their respective modified compounds. However, this application is not limited to these materials, and other conventional materials that can be used as positive electrode active materials for batteries may also be used. One of these positive electrode active materials may be used alone, or two or more of them may be used in combination. Examples of the lithium transition metal oxides may include, but are not limited to, one or more of lithium cobalt oxide (for example, LiCoO₂), lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. Non-limiting examples of the lithium-containing phosphates with an olivine structure may include, but are not limited to, one or more of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon. Non-limiting examples of the lithium cobalt oxide may include LiCoO₂. Non-limiting examples of the lithium nickel oxide may include LiNiO₂. Non-limiting examples of the lithium manganese oxide may include LiMnO₂, LiMn₂O₄, and the like. Non-limiting examples of the lithium nickel cobalt manganese oxide may include LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), and the like. Non-limiting examples of the lithium nickel cobalt aluminum oxide may include LiNi_{0.8}Co_{0.15}Al_{0.05}O₂.

In some embodiments, the positive electrode active material layer further optionally includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode active material layer further optionally includes a conductive agent. As a non-limiting example, the conductive agent may include one or more of superconducting carbon, acetylene black, carbon black, Ketjen black, carbon dots, carbon nanotubes, graphene, and carbon nanofibers.

In some embodiments, the positive electrode plate may be prepared by the following method: the foregoing components for preparing the positive electrode plate, such as the positive electrode active material, conductive agent, binder, and any other components, are dispersed in a solvent to form a positive electrode slurry; and the positive electrode slurry is applied on at least one side surface of the positive electrode current collector, followed by drying and cold pressing to obtain a positive electrode plate. In terms of type, the solvent may be selected from, but is not limited to, any of the solvents mentioned in the foregoing embodiments, such as N-methylpyrrolidone (NMP). The positive electrode slurry may be applied on a single surface of the positive electrode current collector or on two surfaces of the positive electrode current collector. The positive electrode slurry may be applied on a single surface of the positive electrode current collector or on two surfaces of the positive electrode current collector. A solid content of the positive electrode slurry may be 40 weight% (wt%) to 80wt%. A viscosity of the positive electrode slurry at room temperature may be adjusted to 5000 millipascal-second (mPa·s) to 25000 mPa·s. When the positive electrode slurry is applied, based on a weight measured after drying (excluding the weight of the solvent), a coating weight per unit area may be 15 milligrams per square centimeter (mg/cm²) to 35 mg/cm². A compacted density of the positive electrode plate may be 3.0 grams per cubic centimeter (g/cm³) to 3.6 g/cm³, optionally 3.3 g/cm³ to 3.5 g/cm³.

### Negative electrode plate

The negative electrode plate includes a negative electrode current collector and a negative electrode active material layer disposed on at least one surface of the negative electrode current collector, where the negative electrode active material layer includes a negative electrode active material.

As a non-limiting example, the negative electrode current collector has two opposite surfaces in its thickness direction, and the negative electrode active material layer is disposed on either one or both of the two opposite surfaces of the negative electrode current collector.

In some embodiments, the negative electrode current collector may be a metal foil or a composite current collector. For example, as a metal foil, copper foil may be used. The composite current collector may be the composite current collector described above. The composite current collector may also include a polymer material substrate and a metal layer formed on at least one surface of the polymer material substrate. The composite current collector may be obtained by forming a metal material on a polymer material substrate. Non-limiting examples of the metal material in the negative electrode current collector may include one or more of copper, copper alloy, nickel, nickel alloy, titanium, titanium alloy, silver, and silver alloy. Non-limiting examples of the polymer material substrate in the negative electrode current collector may include one or more of substrates such as polypropylene (PP), polyethylene terephthalate (PET), polybutylene terephthalate (PBT), polystyrene (PS), and polyethylene (PE).

In some embodiments, the negative electrode active material may be a negative electrode active material well known in the art for batteries. As a non-limiting example, the negative electrode active material may include one or more of the following materials: artificial graphite, natural graphite, soft carbon, hard carbon, silicon-based materials, tin-based materials, and lithium titanate. Silicon-based materials may include one or more of elemental silicon, silicon oxide compounds, silicon-carbon composites, silicon-nitrogen composites, and silicon alloys. Tin-based materials may include one or more of elemental tin, tin oxide compounds, and tin alloys. However, this application is not limited to these materials, and other conventional materials that can be used as negative electrode active materials for batteries may also be used. One of these negative electrode active materials may be used alone, or two or more of them may be used in combination.

In some embodiments, the negative electrode active material layer further optionally includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may include one or more of superconducting carbon, acetylene black, carbon black, Ketjen black, carbon dots, carbon nanotubes, graphene, and carbon nanofibers.

In some embodiments, the negative electrode active material layer further optionally includes other additives, such as a thickener (for example, sodium carboxymethyl cellulose (CMC-Na)).

In some embodiments, the negative electrode plate may be prepared by the following method: the components for preparing the negative electrode plate, such as the negative electrode active material, conductive agent, binder, and any other components, are dispersed in a solvent (for example, deionized water as a non-limiting example) to form a negative electrode slurry; and the negative electrode slurry is applied on at least one side surface of the negative electrode current collector, followed by processes such as drying and cold pressing to obtain a negative electrode plate. The negative electrode slurry may be applied on a single surface of the negative electrode current collector or on two surfaces of the negative electrode current collector. A solid content of the negative electrode slurry may be 40wt% to 60wt%. A viscosity of the negative electrode slurry at room temperature may be adjusted to 2000 mPa·s to 10000 mPa·s. When the negative electrode slurry is applied, based on a weight measured after drying (excluding the weight of the solvent), a coating weight per unit area may be 75 grams per square meter (g/m²) to 220 g/m². A compacted density of the negative electrode plate may be 1.0 g/cm³ to 1.8 g/cm³.

### Electrolyte

The electrolyte serves to conduct ions between the positive electrode plate and the negative electrode plate. The type of the electrolyte is not particularly limited in this application, which can be selected according to requirements. For example, the electrolyte may be in liquid state, gel state, or all-solid-state.

In some embodiments, the electrolyte is a liquid electrolyte. The liquid electrolyte includes an electrolytic salt and a solvent.

In some embodiments, the electrolytic salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorophosphate (LiPO₂F₂), lithium difluoro(oxalato)borate (LiDFOB), lithium bis(oxalato)borate (LiBOB), lithium difluoro(oxalato)phosphate (LiDFOP), and lithium tetrafluoro(oxalato)phosphate (LiTFOP).

In some embodiments, the solvent may include one or more of ethylene carbonate (EC, 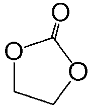 ), propylene carbonate (PC, 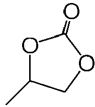 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate ( 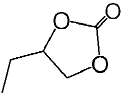 ), fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte further optionally includes an additive. For example, the additive may include a negative electrode film-forming additive, and a positive electrode film-forming additive, and may further include an additive that can improve certain performance of the battery, such as an additive for improving overcharge performance of the battery, or an additive for improving high-temperature or low-temperature performance of the battery.

In some embodiments, the additive in the liquid electrolyte may include, but is not limited to, one or more of fluoroethylene carbonate (FEC), difluoroethylene carbonate (DFEC), and trifluoromethyl ethylene carbonate (TFPC).

### Separator

In some embodiments, the secondary battery further includes a separator. The type of the separator is not particularly limited in this application, and any well-known porous structure separator with good chemical stability and mechanical stability may be used.

In some embodiments, the material of the separator may include one or more of glass fibers, non-woven fabric, polyethylene, polypropylene, and polyvinylidene fluoride. The separator may be a single-layer film or a multilayer composite film, which is not particularly limited. When the separator is a multilayer composite film, the materials of the layers may be the same or different, which are not particularly limited.

In some embodiments, a thickness of the separator is 6 µm to 40 µm, optionally 12 µm to 20 µm.

In some embodiments, the positive electrode plate, negative electrode plate, and separator may be made into an electrode assembly through a winding process or a lamination process.

In some embodiments, the secondary battery may include an outer package. The outer package may be configured to encapsulate the electrode assembly and electrolyte.

In some embodiments, the outer package of the secondary battery may be a hard shell, such as a hard plastic shell, an aluminum shell, or a steel shell. The outer package of the secondary battery may alternatively be a soft pack, such as a pouch-type soft pack. The material of the soft pack may be plastic. Further, non-limiting examples of plastic may include one or more of polypropylene, polybutylene terephthalate, and polybutylene succinate.

The secondary battery includes at least one battery cell. The secondary battery may include one or more battery cells.

In this application, unless otherwise specified, a "battery cell" refers to a basic unit capable of realizing mutual conversion between chemical energy and electrical energy. Further, the battery cell typically includes at least a positive electrode plate, a negative electrode plate, and an electrolyte. During charging and discharging of the battery, active ions intercalate and deintercalate back and forth between the positive electrode plate and the negative electrode plate. The electrolyte serves to conduct active ions between the positive electrode plate and the negative electrode plate.

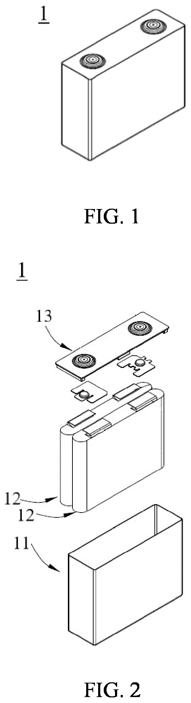

The battery cell is not limited to any particular shape in this application, and may be cylindrical, prismatic, or of any other shape. For example, FIG. 1 shows a battery cell 1 of a prismatic structure as an example.

In some embodiments, referring to FIG. 2, the outer package may include a shell 11 and a cover plate 13. The shell 11 may include a bottom plate and side plates connected to the bottom plate, with the bottom plate and side plates enclosing an accommodating cavity. The shell 11 has an opening communicating with the accommodating cavity, and the cover plate 13 can cover the opening to seal the accommodating cavity. The positive electrode plate, negative electrode plate, and separator can be made into an electrode assembly 12 through a winding process or a lamination process. The electrode assembly 12 is encapsulated in the accommodating cavity. The electrolyte infiltrates the electrode assembly 12. The battery cell 1 may include one or more electrode assemblies 12, which can be selected by those skilled in the art according to actual needs.

The secondary battery may be a battery module or a battery pack.

The battery module includes at least one battery cell. The battery module may include one or more battery cells, and those skilled in the art can select an appropriate number according to the application and capacity of the battery module.

In the battery module, the multiple battery cells may be arranged sequentially along a length direction of the battery module. Certainly, the battery cells may be arranged in any other manner. Further, the multiple battery cells can be fixed by fasteners.

Optionally, the battery module may further include a housing with an accommodating space, and the multiple battery cells are accommodated in the accommodating space.

In some embodiments, the battery module may alternatively be assembled into a battery pack, the battery pack may include one or more battery modules, and those skilled in the art can select an appropriate number according to the application and capacity of the battery pack.

The battery pack may include a battery box and multiple battery modules disposed in the battery box. The battery box includes an upper box body and a lower box body, where the upper box body can cover the lower box body to form a closed space for accommodating the battery modules. The multiple battery modules may be arranged in any manner in the battery box.

Additionally, this application further provides an electric apparatus. The electric apparatus includes the secondary battery provided by this application. The secondary battery may be used as a power source for the electric apparatus or an energy storage unit for the electric apparatus. The electric apparatus may include, but is not limited to, a mobile device, an electric vehicle, an electric train, a ship, a satellite, and an energy storage system. The mobile device may be, for example, a mobile phone, a laptop, or the like. The electric vehicle may be, for example, a battery electric vehicle, a hybrid electric vehicle, a plug-in hybrid electric vehicle, an electric bicycle, an electric scooter, an electric golf cart, an electric truck, or the like, but is not limited thereto.

A secondary battery may be selected for an electric apparatus according to the usage requirements of the electric apparatus.

FIG. 3 shows an electric apparatus 2 as an example. The electric apparatus is a battery electric vehicle, a hybrid electric vehicle, a plug-in hybrid electric vehicle, or the like. To meet the high power and high energy density requirements of the electric apparatus on secondary batteries, a battery pack or battery module may be used.

As another example, the apparatus may be a mobile phone, a tablet computer, a laptop, or the like. Such apparatus is typically required to be light and thin and may use a secondary battery as a power source.

### Examples

To make the technical problems solved, the technical solutions, and the beneficial effects of this application clearer, this application is further described in detail below with reference to embodiments and drawings. It is apparent that the described embodiments are only some rather than all embodiments of this application. The description of at least one exemplary embodiment is merely illustrative and in no way serves as any limitation on this application or the application thereof. Based on the embodiments in this application, all other embodiments obtained by those of ordinary skill in the art without creative efforts fall within the protection scope of this application.

Technologies or conditions not specified in the embodiments are carried out in accordance with the technologies or conditions described in the literature in the art or in accordance with product instructions. Reagents or instruments used without specifying the manufacturer are all conventional products commercially available.

### Example 1

A preparation method of a composite current collector in this example included the following steps.

S101: A slurry including raw materials of a bonding layer was applied onto a surface of a substrate layer by gravure coating.

S102: A metal seed layer was prepared on a surface of the slurry by magnetron sputtering.

S103: A product obtained in S102 was baked at 80°C to 90°C for 4s to 8s, and the slurry was cured to form the bonding layer.

S104: A product obtained in S103 was rolled.

S105: The product obtained after rolling was cured again, where the curing was performed at a temperature of 85°C for a time of 72 hours (h).

S106: A metal thickening layer was prepared by electroplating on a surface of the metal seed layer of the product obtained in S105, where the electroplating was performed at a speed of 4 meters per minute (m/min) to 8 m/min, and the composite current collector in this embodiment was obtained after the electroplating.

### Example 2

A preparation method of a composite current collector in this embodiment included the following steps.

S101: A slurry including raw materials of a bonding layer was applied onto one surface of a substrate layer by gravure coating.

S102: A metal seed layer was applied onto a surface of the slurry by magnetron sputtering.

S103: A product obtained in S102 was baked at 80°C to 90°C for 4s to 8s, and the slurry was cured to form the bonding layer.

S104: A product obtained in S103 was rolled.

S105: The slurry including raw materials of the bonding layer was applied onto the other surface of the substrate layer by gravure coating.

S106: A metal seed layer was applied onto a surface of the slurry by magnetron sputtering.

S107: A product obtained in S106 was baked at 80°C to 90°C for 4s to 8s, and the slurry was cured to form the bonding layer.

S108: A product obtained in S107 was rolled.

S109: The product obtained after rolling was cured again, where the curing was performed at a temperature of 85°C for a time of 72 h.

S110: Metal thickening layers were prepared by electroplating on surfaces of both the two metal seed layers of the product obtained in S109, where the electroplating speed was performed at a speed of 4 m/min to 8 m/min, and the composite current collector in this embodiment was obtained after the electroplating.

### Examples 3 to 18

Examples 3 to 18 differed from Example 2 in that the material of the substrate layer, the thickness of the substrate layer, the material of the bonding layer, the thickness of the bonding layer, the material of the metal seed layer, the preparation method of the metal seed layer, the thickness of the metal seed layer, the thickness of the metal thickening layer, and the like were different. Specific details are shown in Table 1.

### Comparative Examples 1 to 3

Comparative Examples 1 to 3 differed from Example 2 in that the composite current collector did not include a bonding layer, and the material of the substrate layer was different.

### Test example

(1) Metal layer peel strength test: After a sample was adhered to a non-corona surface of an EAA film, 12 µm PET was used to cover the EAA film, and a resulting product was placed on a heat sealing machine for adhesion at a temperature of 120°C and a pressure of 0.2 megapascal (MPa). After the adhesion, the sample was cut into a sample with a length of 100 mm and a width of 20 mm; a surface with no metal layer adhered thereto was adhered to a steel plate with a 3M double-sided tape; the sample was clamped on a fixture of a tensile machine with a spacing of 50 mm; a peel test was performed at a speed of 300 millimeters per minute (mm/min) at 180°C; and a value of a peel force was read and converted to a unit of newton per meter (N/m). Five parallel samples were tested, and ultimately an average peel force was taken.
(2) Composite current collector pore test: An online CCD high-speed camera was used to test the number of pores in a composite current collector that was 1000 meters (m) long, and then the number was divided by an area of a tested segment of the current collector to calculate the number of pores per square meter.
(3) Composite current collector sheet resistance test: A four-probe sheet resistance tester was used to test a sheet resistance of a large surface of a sample metal layer, 30 random points were tested, and an average sheet resistance of the 30 points was taken.

**Table 1**

| | Substrate layer | | Bonding layer | | | Metal seed layer | | | Meta l thick ening layer | Pee l stre ngt h of met al laye r | Number of pores | | Sheet resistan ce |
|---|---|---|---|---|---|---|---|---|---|---|---|---|---|
| | Mat erial | Thic knes s | Materi al | Meltin g point | Thic knes s | Material | Thic knes s | Preparatio n method | Thic kness | | Diam eter > 100 µm | Dia mete r ≤ 100 µm | |
| Example 1 | **PE T** | 3 | Epoxy resin | 280 | 256 | Copper | 182 | Magnetron sputtering | 0.9 | 345 | 0 | 5.6 | 20 |
| Example 2 | **PE T** | 3 | Epoxy resin | 280 | 243 | Copper | 175 | Magnetron sputtering | 0.9 | 311 | 0 | 5.3 | 21 |
| Example 3 | **PP** | 3 | Epoxy resin | 280 | 262 | Copper | 166 | Magnetron sputtering | 0.9 | 321 | 0 | 6.7 | 20 |
| Example 4 | **PI** | 3 | Epoxy resin | 280 | 251 | Copper | 170 | Magnetron sputtering | 0.9 | 366 | 0 | 2.2 | 20 |
| Example 5 | **PE T** | 4.5 | Epoxy resin | 280 | 268 | Copper | 162 | Magnetron sputtering | 0.9 | 343 | 0 | 3.3 | 22 |
| Example 6 | **PP** | 4.5 | Epoxy resin | 280 | 238 | Copper | 169 | Magnetron sputtering | 0.9 | 333 | 0 | 4.6 | 20 |
| Example 7 | **PI** | 4.5 | Epoxy resin | 280 | 244 | Copper | 157 | Magnetron sputtering | 0.9 | 361 | 0 | 1.5 | 21 |
| Example 8 | **PE T** | 3 | Epoxy resin | 280 | 247 | Copper | 188 | Evaporatio n | 0.9 | 355 | 0 | 0.3 | 22 |
| Example 9 | **PP** | 3 | Epoxy resin | 280 | 263 | Copper | 179 | Evaporatio n | 0.9 | 368 | 0 | 0.7 | 21 |
| Example 10 | **PI** | 3 | Epoxy resin | 280 | 271 | Copper | 194 | Evaporatio n | 0.9 | 352 | 0 | 0.1 | 20 |
| Example 11 | **PE T** | 3 | Epoxy resin | 280 | 236 | Copper | 183 | Spraying | 0.9 | 347 | 0 | 0 | 22 |
| Example 12 | **PP** | 3 | Epoxy resin | 280 | 252 | Copper | 173 | Spraying | 0.9 | 321 | 0 | 0 | 21 |
| Example 13 | **PI** | 3 | Epoxy resin | 280 | 273 | Copper | 187 | Spraying | 0.9 | 344 | 0 | 0 | 23 |
| Example 14 | **PE T** | 3 | Polyur ethane | 80 | 262 | Copper | 176 | Spraying | 0.9 | 372 | 0 | 0 | 21 |
| Example 15 | **PP** | 3 | Polyur ethane | 80 | 280 | Copper | 180 | Spraying | 0.9 | 331 | 0 | 0 | 20 |
| Example 16 | **PI** | 3 | Polyur ethane | 80 | 277 | Copper | 177 | Spraying | 0.9 | 325 | 0 | 0 | 22 |
| Example 17 | **PP** | 3 | Epoxy resin | 280 | 266 | Copper | 122 | Magnetron sputtering | 0.9 | 333 | 0 | 6.1 | 21 |
| Example 18 | **PP** | 3 | Epoxy resin | 280 | 254 | Copper-nickel alloy | 168 | Magnetron sputtering | 0.9 | 357 | 0 | 6.6 | 21 |
| Comparativ e Example 1 | **PE T** | 3 | / | | / | Copper | 171 | Magnetron sputtering | 0.9 | 161 | 0.5 | 14.6 | 23 |
| Comparativ e Example 2 | **PP** | 3 | / | | / | Copper | 177 | Magnetron sputtering | 0.9 | 142 | 0.7 | 21.1 | 23 |
| Comparativ e Example 3 | **PI** | 3 | / | | / | Copper | 183 | Magnetron sputtering | 0.9 | 155 | 0.2 | 6.4 | 22 |

In Table 1, the thickness of the substrate layer is measured in µm. The melting point represents the melting point of the polymer included in the bonding layer, which is measured in °C. The thickness of the bonding layer is measured in nm. The thickness of the metal seed layer is measured in nm. The thickness of the metal thickening layer is measured in µm. The peel strength of the metal layer is measured in N/m. The number of the pores is measured in number/square meter (number/m²). The sheet resistance is measured in milliohm per square (mΩ/□).

From Examples 1 to 18 and Comparative Examples 1 to 3, it can be seen that introducing a bonding layer between the substrate layer and the metal layer can enhance the peel strength of the metal layer.

From Examples 11 to 16, it can be seen that when the metal seed layer is prepared by spraying, the number of the pores in the composite current collector can be reduced, especially the number of the pores with a diameter of less than or equal to 100 µm can be reduced.

The various technical features of the above embodiments can be arbitrarily combined. To keep the description concise, not all possible combinations of the various technical features in the above embodiments are described. However, as long as there is no contradiction in the combinations of these technical features, they are all considered to fall within the scope described in this specification.

The above embodiments present only a few embodiments of this application, with relatively specific and detailed descriptions, but they are not to be construed as limiting the scope of the patent of the present invention. It should be noted that, for those of ordinary skill in the art, several variations and improvements can be made without departing from the concept of this application, all of which fall within the protection scope of this application. Therefore, the protection scope of the patent of this application is subject to the appended claims.

## Claims

1. A composite current collector, comprising a substrate layer, a bonding layer, and a metal layer, wherein the substrate layer comprises a first surface and a second surface opposite each other; at least one of the first surface and the second surface is provided with the bonding layer and the metal layer; the bonding layer is located between the substrate layer and the metal layer; the metal layer comprises a metal seed layer and a metal thickening layer; and the metal seed layer is located between the bonding layer and the metal thickening layer.

2. The composite current collector according to claim 1, wherein the bonding layer comprises a polymer with a melting point greater than or equal to 80°C.

3. The composite current collector according to claim 1 or 2, wherein the bonding layer comprises a polymer with a melting point of 80°C to 400°C.

4. The composite current collector according to any one of claims 1 to 3, wherein the bonding layer comprises at least one of polyolefin, ethylene-propylene copolymer, ethylene-vinyl acetate copolymer, ethylene-vinyl alcohol copolymer, polyurethane, epoxy resin, styrene-isoprene-styrene copolymer, styrene-butadiene-styrene copolymer, styrene-ethylene-butylene-styrene copolymer, styrene-ethylene-propylene-styrene copolymer, silicone rubber, phenolic resin, urea-formaldehyde resin, and polyimide.

5. The composite current collector according to any one of claims 1 to 4, wherein a thickness of the bonding layer is 200 nm to 1500 nm.

6. The composite current collector according to any one of claims 1 to 5, wherein a thickness of the bonding layer is 300 nm to 700 nm.

7. The composite current collector according to any one of claims 1 to 6, wherein the metal seed layer comprises at least one of a sputtered metal seed layer, a vapor-deposited metal seed layer, and a sprayed metal seed layer.

8. The composite current collector according to any one of claims 1 to 7, wherein a thickness of the metal seed layer is 1 nm to 200 nm.

9. The composite current collector according to any one of claims 1 to 8, wherein a thickness of the metal seed layer is 20 nm to 100 nm.

10. The composite current collector according to any one of claims 1 to 9, wherein the metal seed layer comprises at least one of copper, copper alloy, aluminum, and aluminum alloy.

11. The composite current collector according to any one of claims 1 to 10, wherein the metal thickening layer comprises an electroplated metal thickening layer.

12. The composite current collector according to any one of claims 1 to 11, wherein a thickness of the metal thickening layer is 0.2 µm to 2 µm.

13. The composite current collector according to any one of claims 1 to 12, wherein a thickness of the metal thickening layer is 0.5 µm to 1.5 µm.

14. The composite current collector according to any one of claims 1 to 13, wherein the substrate layer comprises at least one of polyamide, polyimide, polyethylene terephthalate, polybutylene terephthalate, polyparaphenylene terephthalamide, polyethylene, polypropylene, poly(ethylene-propylene), polytetrafluoroethylene, polyvinylidene fluoride, polystyrene, polyvinyl chloride, acrylonitrile-butadiene-styrene copolymer, polyoxymethylene, epoxy resin, phenolic resin, silicone rubber, and polycarbonate.

15. The composite current collector according to any one of claims 1 to 14, wherein a thickness of the substrate layer is 2 µm to 10 µm.

16. The composite current collector according to any one of claims 1 to 15, wherein a thickness of the substrate layer is 3 µm to 8 µm.

17. A preparation method of a composite current collector, comprising the following steps:
providing a substrate layer, wherein the substrate layer comprises a first surface and a second surface opposite each other; and
preparing a bonding layer, a metal seed layer, and a metal thickening layer sequentially on the first surface and/or the second surface.

18. The preparation method according to claim 17, wherein the metal seed layer is prepared by at least one of sputtering, vapor deposition, and spraying.

19. The preparation method according to claim 17 or 18, wherein the metal thickening layer is prepared by electroplating.

20. An electrode plate, comprising at least one of the composite current collector according to any one of claims 1 to 16 and a composite current collector prepared using the preparation method according to any one of claims 17 to 19.

21. A secondary battery, comprising the electrode plate according to claim 20.

22. An electric apparatus, comprising at least one of the composite current collector according to any one of claims 1 to 16, a composite current collector prepared using the preparation method according to any one of claims 17 to 19, the electrode plate according to claim 20, and the secondary battery according to claim 21.
